# EUROPÄISCHE PATENTSCHRIFT

(11) **EP 1 446 299 B1**
(45) Veröffentlichungstag und Bekanntmachung des Hinweises auf die Patenterteilung: **20.04.2005**
(21) Anmeldenummer: 02791686.5
(22) Anmeldetag: 16.11.2002
(51) Int. Cl.: B60H 1/22

(54) **ZUHEIZER FÜR EINE FAHRZEUGE-KLIMAANLAGE MIT MINDESTENS EINEM WÄRMEROHR**
HEATER FOR A VEHICLE AIR CONDITIONING SYSTEM COMPRISING AT LEAST ONE HEAT PIPE
APPAREIL DE CHAUFFAGE CONNU POUR UNE INSTALLATION DE CLIMATISATION D'UN VEHICULE ET COMPORTANT AU MOINS UN TUYAU DE CHAUFFE

(30) Priorität: 23.11.2001 DE 10157446
(43) Veröffentlichungstag der Anmeldung: 18.08.2004
(73) Patentinhaber: Webasto AG, 82131 Stockdorf (DE)
(72) Erfinder: ERBACHER, Frank Dr., D-82340 Feldafing (DE)
(74) Vertreter: Rothkopf, Ferdinand, Dipl.-Ing.
(86) Internationale Anmeldenummer: PCT/EP2002/012872
(87) Internationale Veröffentlichungsnummer: WO 2003/043842

(56) Entgegenhaltungen:
- EP-A- 1 054 313
- DE-A- 4 014 501
- FR-A- 2 709 816
- US-A- 4 448 242
- US-A- 5 749 412
- PATENT ABSTRACTS OF JAPAN vol. 013, no. 060 (M-796), 10. Februar 1989 (1989-02-10) & JP 63 265752 A (NIPPON DENSO CO LTD), 2. November 1988 (1988-11-02) in der Anmeldung erwähnt

## Beschreibung

Die Erfindung betrifft einen Zuheizer für eine Fahrzeug-Klimaanlage mit mindestens einem Wärmerohr, welches zwischen einer wärmeerzeugenden Einrichtung mit einem Heizelement und mindestens einer wärmeabgebenden Einrichtung über ein im Wärmerohr verdampfendes und kondensierendes Medium eine wärmeleitende Verbindung herstellt. Ferner betrifft die Erfindung eine Klimaanlage für ein Fahrzeug mit einem derartigen Zuheizer, ein Fahrzeug mit einer solchen Klimaanlage und ein Verfahren zum Herstellen eines Zuheizers für eine solche Fahrzeug-Klimaanlage.

Zuheizer der eingangs genannten Art werden bei Fahrzeug-Klimaanlagen eingesetzt, um einen flüssigen oder gasförmigen Wärmeträger unabhängig von einem Verbrennungsmotor des Fahrzeugs aufheizen zu können. Mit dem aufgeheizten Wärmeträger, beispielsweise Umgebungsluft, kann nachfolgend ein Fahrgastraum des Fahrzeugs verhältnismäßig schnell aufgeheizt und es können insbesondere Scheiben des Fahrzeugs enteist werden. Man spricht vom sogenannten Defrosten.

Bei einem elektrischen Zuheizer, wie er beispielsweise aus der EP 0 243 077 A2 bekannt ist, sind in dessen Wärmeübertrager PTC-Heizelemente und Radiatorelemente mit Rippen geschichtet angeordnet. Die PTC-Heizelemente erwärmen die Radiatorelemente in ihrer unmittelbaren Nähe, die von Umgebungsluft durchströmt werden. An einem Rand des Zuheizers ist eine elektrische Kontaktierung für die PTC-Heizelemente ausgebildet.

Derartige Zuheizer regeln bei Erreichen einer bestimmten Grenztemperatur durch Ansteigen des Widerstandes der PTC-Heizelemente ihre Leistung selbsttätig ab.

Wird an einer PTC-Keramik eine ausreichend hohe Spannung angelegt, so dass sich die Keramik durch den Stromfluss aufheizt, so tritt ein Gleichgewichtszustand zwischen zugeführter elektrischer Leistung und abgegebener thermischer Leistung ein. Die Keramik kann nicht beliebig hohe Temperaturen annehmen. Durch die spezielle Widerstands-Temperaturcharakteristik der PTC-Keramik steigt der Widerstand überproportional an und der elektrische Strom sowie die Leistung werden begrenzt.

Die beschriebene Eigenschaft der PTC-Keramik kann ideal für Heizanwendungen genutzt werden. PTC-Heizelemente können als selbstregelnde dynamische Heizelemente verwendet werden. Daher kann mit PTC-Heizelementen die Forderung der Fahrzeug-Hersteller, dass der elektrische Zuheizer bei geschlossenen Auslassklappen und voller Heizleistung wegen Schmelz- und Brandgefahr eine Grenztemperatur von ca. 150 °C bis 165 °C nicht überschreiten darf, eingehalten werden.

Bekannte elektrische Zuheizer weisen aber Nachteile hinsichtlich ihrer konstruktiven Gestaltung auf. So sind für die im Wärmeübertrager des Zuheizers verteilten PTC-Heizelemente lange elektrische Zuleitungen für hohe Ströme erforderlich. Durch die Aufteilung der Heizleistung in Form von PTC-Heizelementen entsteht ferner das Problem, dass die Heizleistung nicht beliebig gleichmäßig über den Wärmeübertrager des Zuheizers verteilt werden kann. Vielmehr führen nicht besetzte PTC-Plätze, wie sie zwangsläufig durch die hohe Widerstandstoleranz von +/- 35 % der PTC-Heizelemente entstehen, zu Kaltstellen in der Oberfläche des Zuheizers. Diese Kaltstellen können sich als Kaltluftfahnen durch die Luftkanäle der Klimaanlage ziehen.

Die Integration der PTC-Heizelemente in den Wärmeübertrager führt auch dazu, dass der Wärmeübertrager nicht sortenrein ist, sondern aus mehreren Werkstoffen aufgebaut ist. Diese Werkstoffe, z.B. Aluminium, Kunststoff und Keramik, sind nach der Lebensdauer des Zuheizers nur schwer aus dem Wärmeübertrager zu trennen und zu recyceln.

Ferner führt das Verwenden von PTC-Heizelementen zu hohen spezifischen Heizkosten. PTC-Keramik ist ein teures Material mit einem hohen spezifischen Gewicht. Für ein sicheres Kontaktieren sind aufwendige mechanische Konstruktionen in Gestalt von Stahlrahmen oder dergleichen am Rand des Zuheizers notwendig.

Es sind auch elektrische Zuheizer bekannt, bei denen Heizelemente elektronisch geregelt werden. Zum Regeln werden Regeltransistoren mit einer Stromstärke der Regelströme von ca. 70 bis 140 Ampere verwendet. Solche Regeltransistoren erzeugen Abwärme in der Größenordnung von etwa 70 Watt, die vorteilhaft auch in den Wärmeübertrager des Zuheizers eingeleitet wird. Das Einleiten der Wärme erfordert aber einen hohen konstruktiven Aufwand. Daher werden im allgemeinen Regeltransistoren verwendet, die eine möglichst geringe Verlustleistung aufweisen. Die Regelströme von hoher Stromstärke müssen mit Wiederholraten von beispielsweise 30 Hz und 100 Hz geschaltet werden. Dies führt zu erheblichen Problemen hinsichtlich der elektromagnetischen Verträglichkeit des Zuheizers innerhalb des Fahrzeugs.

Ein die Gattung bildender Zuheizer ist aus Patent Abstracts of Japan 63265752 A bekannt. Dort ist ein Fluidheizgerät beschrieben, bei dem mit einem Wärmerohr (einer sogenannten Heat-Pipe) von einem PTC-Heizelement Wärme zu Rippen in einem Wärmespeicher und zu Rippen in einem Durchfluss-Wärmeübertrager transportiert werden kann. Das PTC-Heizelement dient als wärmeerzeugende Einrichtung, von der die Wärme über das Wärmerohr zu den Rippen als wärmeabgebende Einrichtungen transportiert wird. Ziel ist es durch besondere Techniken im Wärmespeicher Wärme über einen langen Zeitraum zu speichern. Bei dem letztgenannten Zuheizer besteht das Problem, dass dieser verhältnismäßig teuer in der Herstellung ist. Insbesondere die Gestaltung der wärmeerzeugenden Einrichtung ist aufwendig.

Aus der DE 197 43 427 A1 ist ein Wärmeübertrager bekannt, der in klassischer Bauweise ohne Wärmerohr mit einer Vielzahl parallel zueinander angeordneter Flachrohre zum Führen eines Kühlmediums gestaltet ist. Enden der Flachrohre sind abgebogen, dicht aneinander gelegt und je mit einem Anschlussrohrstück verbunden, das als Sammelrohr für das Kühlmedium dient. Das Sammelrohr ist im Strangpressverfahren als Profilrohrstück ausgebildet. Ziel ist es hier zwischen den Flachrohren und dem Sammelrohr eine fluiddichte Verbindung zu schaffen. Wärme wird hingegen nicht über die Verbindung zwischen Flachrohr und Sammelrohr geleitet.

Aus DE 31 43 334 C2 ist ein Wärmetauscher mit einem quer von Luft beaufschlagten Bündel parallel verlaufender Rohre bekannt, wobei die Rohre nach Art von Wärmerohren zwischen zwei Wärmetauscherköpfen angeordnet sind. Innerhalb des einzelnen Wärmetauscherkopfes ist zwischen zwei benachbarten Rohren jeweils eine Wärmetauscherplatte vorgesehen, die jeweils als Strangpressprofil in Form einer Stegdoppelplatte mit mehreren parallel nebeneinander verlaufenden Kanälen ausgebildet ist. Die Wärmetauscherplatten erstrecken sich quer zur Längsrichtung des jeweiligen Wärmetauscherkopfes. An den Längsseiten eines jeden Wärmetauscherkopfes sind Längskanäle ausgebildet, die mit den Kanälen der sich quer erstreckenden Wärmetauscherplatten flüssigkeitsleitend verbunden sind.

Aus DE 40 14 501 A1 ist eine Fahrzeugheizungsanlage und ein Verfahren zum Betreiben derselben bekannt, bei denen ein Wärmerohr als Verbindung zwischen einem Brenner als eine wärmeerzeugende Einrichtung und einem Wärmetauscher als eine wärmeabgebende Einrichtung dient.

Aus DE 199 11 547 A1 ist eine elektrische Heizeinrichtung für ein Kraftfahrzeug bekannt, die aus mehreren, parallel angeordneten und PTC-Heizelemente aufweisenden Heizelementen und aus Wellrippen aufgebaut ist, die an den Heizelementen in wärmeleitender Verbindung anliegen.

Der Erfindung liegt die Aufgabe zugrunde, einen gattungsgemäßen Zuheizer derart zu gestaltet, dass er kostengünstiger herstellbar ist. Damit sollen die Gesamtherstellkosten der zugehörigen Klimaanlage eines Fahrzeugs gesenkt werden.

Diese Aufgabe ist erfindungsgemäß mit einem eingangs genannten Zuheizer gelöst, bei dem die wärmeerzeugende Einrichtung mit einem Strangpressprofil gestaltet ist, an das das mindestens eine Wärmerohr wärmeleitend gekoppelt ist. Ferner ist die Aufgabe mit einer Klimaanlage für ein Fahrzeug gelöst, bei der ein derartiger erfindungsgemäßer Zuheizer eingebunden ist, sowie mit einem Fahrzeug, das eine derartige erfindungsgemäße Klimaanlage aufweist. Darüber hinaus schafft ein Verfahren mit den Schritten Herstellen einer wärmeleitenden Verbindung zwischen mindestens einem Wärmerohr und einem Strangpressprofil, in dessen Längsrichtung eine Öffnung ausgebildet ist, und Einschieben von mindestens einem Heizleiter oder einem PTC-Heizelement in die Öffnung, eine Lösung für die gestellte Aufgabe.

Erfindungsgemäß wird die wärmeerzeugende Einrichtung des Zuheizers mit einem Gehäuse versehen, dass als langgestrecktes Strangpressprofil hergestellt ist. Strangpressprofile lassen sich kostengünstig herstellen, erfüllen hohe Maßanforderungen und ermöglichen große Freiheiten bei der Gestaltung der Profilquerschnitte. Darüber hinaus können zum Strangpressen insbesondere Aluminiumlegierungen verwendet werden, die eine hohe Wärmeleitfähigkeit aufweisen. Das erfindungsgemäße Strangpressprofil führt zu einer besonders gleichmäßigen Wärmeverteilung an der wärmeerzeugenden Einrichtung. Bei einem Zuheizer mit mehreren Wärmerohren werden diese daher gleichmäßig erwärmt und ein Bilden von Kältefahnen an den wärmeabgebenden Einrichtungen des Zuheizers ist so vermieden.

Für das erfindungsgemäße Profil ist es in zwei Bereichen besonders sinnvoll, wenn es durch Strangpressen hergestellt ist.

Der erste Bereich ist dort, wo das Heizelement, beispielsweise ein Heizleiter, innerhalb der wärmeerzeugenden Einrichtung anzuordnen ist. Dieser erste Bereich erstreckt sich über nahezu die gesamte Länge des Strangpressprofils. In einem Strangpressprofil lassen sich besonders vorteilhaft langgestreckte Hohlräume ausbilden. Ein solcher Hohlraum kann bei dem erfindungsgemäßen Strangpressprofil genutzt werden, um z.B. den Heizleiter darin einzuschieben und festzulegen. Das Festlegen kann mit einer wärmeleitenden Masse geschehen, die in den Hohlraum zwischen Strangpressprofil und Heizleiter eingefüllt wird. Darüber hinaus kann das Strangpressprofil verpresst werden. Alle diese Anordnungen schaffen eine einfach und kostengünstig herzustellende Kombination aus Gehäuse und Heizelement als wärmeerzeugende Einrichtung.

Der zweite Bereich ist die Schnittstelle zwischen der wärmeerzeugenden Einrichtung und dem Wärmerohr. Diese Schnittstelle muss insbesondere gut wärmeleitend sein. Erfindungsgemäß kann dieser zweite Bereich an einem Strangpressprofil durch Queröffnungen gestaltet sein, die in dem Profil einfach und zugleich präzise auszubilden sind. Solche Öffnungen können beispielsweise in das Strangpressprofil gestanzt oder gebohrt werden. Das Material des Strangpressprofils kann mit den in den Queröffnungen angeordneten Wärmerohren kostengünstig und zugleich prozesssicher verlötet oder verpresst werden. Alternativ können die Wärmerohre in einer Längsnut des Strangpressprofils eingeschoben sein. Auch eine Kombination von Queröffnung und Längsnut ist denkbar. In jedem Fall ist ein Strangpressprofil mit solcher Gestalt einfach, kostengünstig und zugleich mit hoher Maßgenauigkeit herstellbar.

Darüber hinaus können an einem Strangpressprofil in besonders einfacher Weise sogenannte Funktionsflächen zum Anbringen von Elektronikbauteilen vorgesehen sein. Solche Funktionsflächen lassen sich an Strangpressprofilen insbesondere gut zum Befestigen von Transistoren ausbilden.

Ferner können Strangpressprofile mit ein und demselben Werkzeug nahezu ohne Mehraufwand in verschiedenen Längen gebildet werden. Es können systematisch bzw. modular verschiedene Längen vorgesehen werden, mittels denen sich verschiedene Heizertypen auf der Grundlage von nur einem Werkzeug herstellen lassen.

Bei bekannten Wärmeübertragern mit einem flüssigen Wärmeträger, die keine Wärmerohre aufweisen, sind zum Teil Strangpressprofile verwendet worden, weil mit ihnen eine fluiddichte Verbindung geschaffen werden konnte. Erfindungsgemäß besteht zwischen dem Heizelement und dem Wärmerohr keine fluidleitende Verbindung. Erfindungsgemäß muss Wärme transportiert werden.

Der Kerngedanke der Erfindung ist also, dass mit einem Strangpressprofil mehrere Probleme gleichzeitig gelöst werden können. Eines der Probleme ist die Frage, wie das Heizelement angekoppelt werden kann, ein zweites Problem ist das Anbringen der Wärmerohre. Darüber hinaus bildet das Strangpressprofil die Grundlage für vorteilhafte Weiterbildungen und besonders kostengünstig herzustellende verschiedenartige Zuheizertypen.

Die erfindungsgemäße Lösung ist besonders bei Zuheizern mit einer hohen Leistungsdichte an der Schnittstelle zwischen wärmeerzeugender Einrichtung und dem Wärmerohr sinnvoll einzusetzen. Aufgrund der guten Wärmleitfähigkeit des verwendeten Strangpressprofils kann in diesem Bereich ein verhältnismäßig geringer Temperaturgradient bei der Wärmeleitung erreicht werden. Daher reagiert die erfindungsgemäße wärmeerzeugende Einrichtung beispielsweise bei einem Verdämmen der wärmeabgebenden Einrichtung besonders schnell, indem sie abregelt.

Bei einer vorteilhaften Weiterbildung der Erfindung ist im Strangpressprofil in dessen Querrichtung mindestens eine erste Öffnung zum Aufnehmen eines Endes eines Wärmerohres ausgebildet. Wie oben erwähnt sind solche Öffnungen kostengünstig herstellbar. Das Ende des Wärmerohres ist bei dieser Gestaltung vom Strangpressprofil umfasst und es ist eine verhältnismäßig große Wärmeübergangsfläche geschaffen. Alternativ kann das Wärmerohr mit seinem Ende bzw. seinem Grund auch auf der wärmeerzeugenden Einrichtung aufgelötet sein.

Die oben erwähnte wärmeleitende Verbindung zwischen dem Strangpressprofil und dem Wärmerohr kann besonders vorteilhaft durch eine Verlötung gebildet sein. Beim Verlöten können eine Vielzahl Wärmerohre mit einem Arbeitsgang an das Strangpressprofil angekoppelt werden. Darüber hinaus werden beim Verlöten Hohlräume und Spalte zwischen dem Wärmerohr und dem Strangpressprofil gefüllt und so eine gute Wärmeleitfähigkeit der Verbindung geschaffen.

Alternativ oder zusätzlich kann die wärmeleitende Verbindung zwischen dem Strangpressprofil und dem Wärmerohr durch eine Verstemmung gebildet sein. Das Verstemmen bietet insbesondere den Vorteil, dass dabei keine hohen Temperaturen entstehen und demzufolge die wärmeerzeugende Einrichtung auch nicht durch starkes Erwärmen geschädigt werden kann. Ein Verstemmverfahren ist ferner in der Regel sehr kostengünstig und insbesondere für das Fertigen hoher Stückzahlen das Verfahren der Wahl.

Im Strangpressprofil ist vorteilhaft in dessen Längsrichtung eine zweite Öffnung zum Aufnehmen mindestens eines PTC-Heizelementes oder eines Heizleiters ausgebildet. Die zweite Öffnung kann, wie oben erwähnt, mit großer Gestaltungsfreiheit ausgebildet werden und daher an die für ein bzw. mehrere PTC-Heizelemente oder einen Heizleiter erforderliche Form genau angepasst werden.

Ein PTC-Heizelement kann in die Öffnung eingeschoben und in dieser durch Verpressen des Strangpressprofils zum PTC-Heizelement hin festgelegt und gegebenenfalls elektrisch kontaktiert werden.

Am erfindungsgemäßen Strangpressprofil ist ferner vorteilhaft insbesondere im Bereich der zweiten Öffnung zumindest eine Funktionsfläche für die mechanische, elektrische oder wärmeleitende Anbindung des mindestens einen PTC-Heizelementes oder des mindestens einen Heizleiters vorgesehen. Eine solche Funktionsfläche ist erfindungsgemäß ein kostenloses Nebenprodukt des Strangpressverfahrens. Eine in der wärmeerzeugenden Einrichtung anzuordnende Einrichtung kann mit Hilfe der Funktionsfläche wärmetechnisch angebunden, elektrisch kontaktiert und zugleich mechanisch festgelegt werden. Eine Funktionsfläche kann mit einem Strangpressverfahren mit einer besonders glatten Oberfläche versehen werden, welche insbesondere bei der wärmetechnischen und elektrischen Kontaktierung vorteilhaft ist. An einer derartigen Funktionsfläche kann außer einem PTC-Heizelement oder einem Heizleiter auch ein elektrischer Regler, beispielsweise in Gestalt eines Regel-Transistors, befestigt werden.

Die genannte zweite Öffnung kann darüber hinaus als Schlitz gestaltet sein, in den insbesondere das mindestens eine PTC-Heizelement in Querrichtung des Strangpressprofils eingeschoben ist. Alternativ können Heizelemente auch axial in das Strangpressprofil eingeschoben werden. In der Regel sind bei einem Zuheizer einer Fahrzeug-Klimaanlage eine Mehrzahl bis zu einer Vielzahl PTC-Heizelemente anzuordnen. Dies geschieht bei der beschriebenen Weiterbildung durch einfaches Einschieben der einzelnen PTC-Heizelemente radial in einen axialgerichteten Schlitz. Der sich ergebende kurze Einschiebeweg und die hohe Maßgenauigkeit am Schlitz ermöglichen ein kostengünstiges und zugleich prozesssicheres Herstellen des derart weitergebildeten Zuheizers.

Das mindestens eine PTC-Heizelement ist ferner vorteilhaft in dem Schlitz durch federnde Vorspannung des Strangpressprofils gehalten. Das PTC-Heizelement ist im Schlitz eingeklemmt und durch Klemmen mechanisch festgelegt. Zugleich ist zwischen den geklemmten Stirnflächen des PTC-Heizelements und dem Material des Strangpressprofils ein hervorragender Wärmeübergang geschaffen. Die Klemmung kann durch elastische Dehnung des Strangpressprofils selbst erzeugt werden. Alternativ oder zusätzlich kann eigens ein Federelement vorgesehen sein, um die Klemmung über der Lebensdauer des Zuheizers sicherzustellen.

Nachfolgend werden Ausführungsbeispiele einer erfindungsgemäßen Fahrzeug-Klimaanlage anhand der beigefügten schematischen Zeichnungen näher erläutert. Es zeigt:
- Fig. 1: einen Querschnitt einer erfindungsgemäßen Klimaanlage,
- Fig. 2: eine perspektivische Ansicht eines Zuheizers der Klimaanlage gemäß Fig. 1,
- Fig. 3: eine Seitenansicht eines Abschnitts eines teilweise aufgebrochenen Wärmerohrs des Zuheizers gemäß Fig. 2,
- Fig. 4: eine perspektivische Ansicht eines ersten Ausführungsbeispiels eines erfindungsgemäßen Strangpressprofils einer wärmeerzeugenden Einrichtung an einem Zuheizer gemäß Fig. 2,
- Fig. 5: eine perspektivischer Ansicht eines zweiten Ausführungsbeispiels eines erfindungsgemäßen Strangpressprofils einer wärmeerzeugenden Einrichtung an einem Zuheizer gemäß Fig. 2,
- Fig. 6: einen Querschnitt eines dritten Ausführungsbeispiels eines erfindungsgemäßen Strangpressprofils einer wärmeerzeugenden Einrichtung an einem Zuheizer gemäß Fig. 2,
- Fig. 7: einen Querschnitt eines vierten Ausführungsbeispiels eines erfindungsgemäßen Strangpressprofils einer wärmeerzeugenden Einrichtung an einem Zuheizer gemäß Fig. 2, und
- Fig. 8: ein Diagramm, welches den Zusammenhang zwischen Widerstand und Temperatur einer PTC-Keramik veranschaulicht.

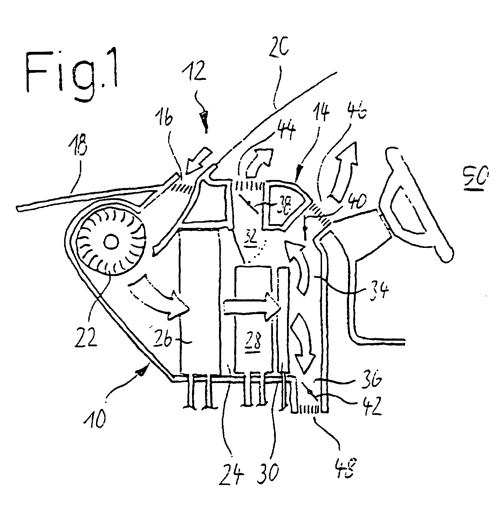

In Fig. 1 ist eine Klimaanlage 10 für ein Fahrzeug 12 in Gestalt eines Personenkraftwagens dargestellt. Die Klimaanlage 10 ist im Bereich einer Instrumententafel 14 des Fahrzeugs 12 eingebaut. Sie weist einen Lufteinlass 16 auf, der sich zwischen einer Motorhaube 18 und einer Windschutzscheibe 20 des Fahrzeugs 12 befindet. Unterhalb des Lufteinlasses 16 befindet sich ein Luftgebläse 22, welches Luft aus der Umgebung des Fahrzeugs 12 in einen Klimakasten 24 fördert. Der Klimakasten 24 ist ein Raum, der sich unterhalb der Windschutzscheibe 20 befindet und in dem zwei Wärmeübertrager 26, 28 und ein Zuheizer 30 hintereinander angeordnet sind.

Luft, die vom Luftgebläse 22 durch die Wärmeübertrager 26, 28 bzw. den Zuheizer 30 gefördert und gegebenenfalls erwärmt worden ist, gelangt nachfolgend in diverse Luftkanäle 32, 34 und 36, die in der Instrumententafel 14 ausgebildet sind. Durch die Luftkanäle 32, 34 und 36 gelangt die Luft zu Auslassklappen 38, 40 und 42 und schließlich durch Luftauslässe 44, 46 und 48 in einen Fahrgastraum 50.

Die Wärmeübertrager 26 und 28 sind für flüssige Wärmeträger vorgesehen, beispielsweise das Kühlwasser eines nicht dargestellten Verbrennungsmotors des Fahrzeugs 12. Die flüssigen Wärmeträger werden von einer weiter nicht dargestellten Heizung oder Kühlung des Fahrzeugs 12 durch die Wärmeübertrager 26 und 28 gefördert.

Der Zuheizer 30 ist als elektrischer Zuheizer gestaltet, mit dessen Hilfe die Luft aus der Umgebung des Fahrzeugs 12 erwärmt werden soll, wenn von der restlichen Heizung des Fahrzeugs 12 nicht ausreichend Wärmeenergie bereit gestellt werden kann. Dies ist beispielsweise der Fall, wenn das Kühlwasser des Verbrennungsmotors unmittelbar nach seinem Start kalt ist. Ferner kann ein elektrischer Zuheizer sinnvoll bzw. erforderlich sein, wenn das Fahrzeug 12 mit einem verbrauchsoptimierten Verbrennungsmotor versehen ist, der insgesamt verhältnismäßig wenig Abwärme liefert.

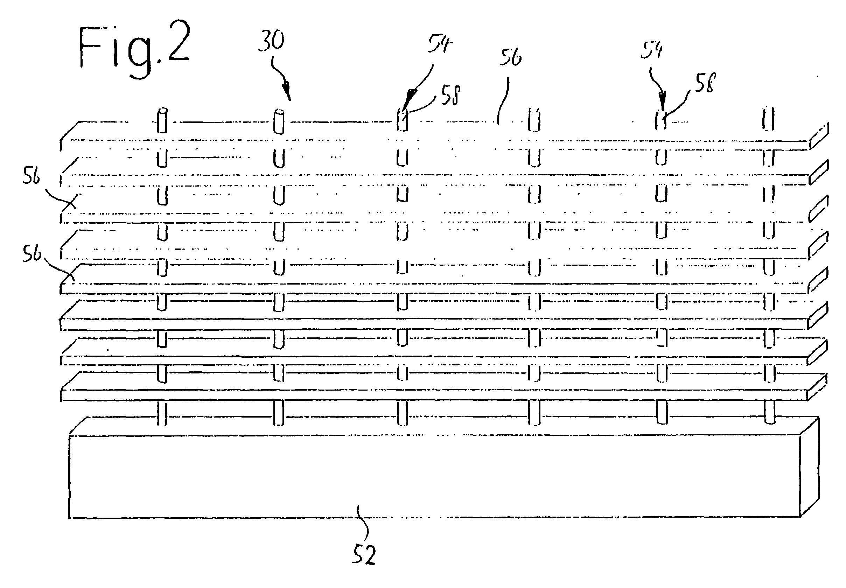

Fig. 2 veranschaulicht den Grundaufbau des erfindungsgemäßen elektrischen Zuheizers 30.

Der Zuheizer 30 weist eine einzige im wesentlichen geschlossene wärmeerzeugende Einrichtung 52 auf, die mit wärmeleitenden Einrichtungen 54 in Gestalt von Wärmerohren 58 verbunden ist. Die Wärmerohre 58 sind an wärmeabgebenden Einrichtungen 56 in Form von einer Vielzahl Rippen wärmeleitend angeschlossen und bilden mit diesen einen Wärmeübertrager des Zuheizers 30.

Die einzelnen Einrichtungen 52, 54 und 56 bilden innerhalb des Zuheizers 30 einzelne Module, die je nach geforderter Heizleistung und gewünschten Strömungs- und Platzverhältnissen an den Rippen einzeln angepasst und kombiniert werden können. Dabei kann für die Wärmerohre 58 in Kombination mit den Rippen ein herkömmlicher Wärmeübertrager verwendet werden, wie er beispielsweise bei Wasser-Luft-Wärmeübertragern verwendet wird. Die Rippen können sich auch als wellen- oder zickzackförmiges Bleche zwischen je zwei Wärmerohren 58 erstrecken. Ein derartiger, kostengünstig zu fertigender Wärmeübertrager ist beispielsweise aus EP 0 775 884 A3 bekannt. Die Wärmerohre 58 sind Rundrohre. Vorteilhaft ist auch eine Gestaltung als Flachrohre. Die oben genannten zickzackförmigen Rippen können an solche Flachrohre besonders gut angekoppelt werden.

Die wärmeerzeugende Einrichtung 52 ist erfindungsgemäß an einem Rand des Zuheizers 30 angeordnet. Von ihr stehen mehrere Wärmerohre 58 lotrecht ab und ragen durch die Vielzahl Rippen 56, welche sich regelmäßig beabstandet parallel zu der wärmeerzeugenden Einrichtung 52 erstrecken. Die Wärmerohre 58 durchsetzen die Rippen 56 also im wesentlichen senkrecht.

Zwischen der wärmeerzeugenden Einrichtung 52 und den Wärmerohren 58, sowie zwischen den Wärmerohren 58 und den wärmeabgebenden Rippen 56, sind je Verbindungen ausgebildet, die besonders gut wärmeleitend sind.

Die erfindungsgemäß vorgesehenen Wärmerohre 58 ermöglichen es, dass die Heizelemente des Zuheizers 30 auf einen Rand oder zumindest auf einen Bereich von dessen Wärmeübertrager konzentriert werden können. Die erzeugte Wärme kann mittels der Wärmerohre 58 erfindungsgemäß dennoch gleichmäßig über die gesamte Oberfläche des Wärmeübertragers verteilt werden, ohne dass es zur Bildung von Kaltluftfahnen kommt.

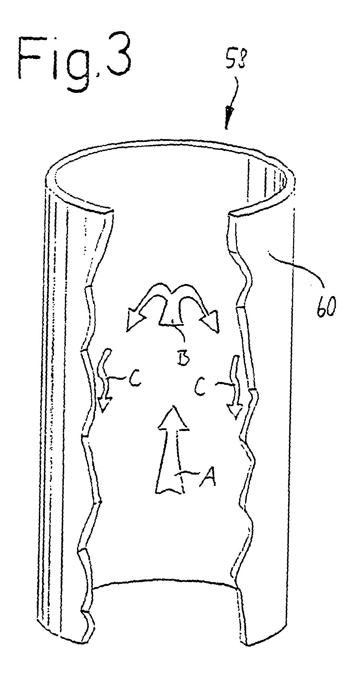

In Fig. 3 ist die Funktion eines Wärmerohres 58 als wärmeleitende Einrichtung 54 innerhalb des Zuheizers 30 veranschaulicht. Solch ein Wärmerohr 58 wird auch als "Heat-Pipe" bezeichnet.

Im in Fig. 3 abschnittsweise dargestellten Wärmerohr 58 erfolgt der Wärmetransport von unten noch oben. Im unteren Bereich des Wärmerohres 58 sitzt als Wärmequelle die wärmeerzeugende Einrichtung 52. Von ihr wird eine Flüssigkeit verdampft, die sich im Wärmerohr 58 befindet. Als Flüssigkeit kann beispielsweise hochreines Wasser verwendet werden. Die verdampfte Flüssigkeit steigt mit hoher Geschwindigkeit als Dampf im Wärmerohr 58 auf. Dies ist mit Pfeil A veranschaulicht.

Der Dampf gelangt an Stellen einer hohlzylindrischen Wand 60 des Wärmerohrs 58, an denen verhältnismäßig geringe Temperaturen herrschen, weil das Wärmerohr 58 dort beispielsweise durch Wärmeleitung an einer Rippe gekühlt worden ist (Pfeil B). An den kälteren Stellen kondensiert der Dampf. Der verflüssigte Dampf strömt als Flüssigkeit zum unteren Bereich des Wärmerohres 58 und der dort angeordneten Wärmequelle zurück (Pfeil C). Mit einem erneuten Verdampfen der Flüssigkeit beginnt der beschriebene Kreislauf des Wärmetransports von neuem.

Der Dampf kondensiert am Wärmerohr 58 genau dort, wo die kälteren Stellen der Wand 60 sind, also an den Stellen, an denen Heizbedarf besteht. Die Wand 60 des Wärmerohrs 58 ist daher nahezu homogen temperiert. Ein merklicher Temperaturabfall, wie man ihn bei der Wärmeleitung in einem Festkörper kennt, ist im allgemeinen nicht zu verzeichnen. Durch den Phasenübergang zwischen flüssig und gasförmig können große Wärmemengen transportiert werden. Die Wärmetransportfähigkeit eines solchen Wärmerohres 58 ist im Vergleich zu Festkörpern mit ähnlichen Abmessungen etwa 10 bis 1000 mal höher.

Das Zurückführen der kondensierten Flüssigkeit zur Wärmequelle kann auch durch Kapillarwirkung in beispielsweise einem feinen Netz an der Innenseite des Wärmerohres 58 erfolgen. Das Wärmerohr 58 kann dann auch waagrecht angeordnet betrieben werden.

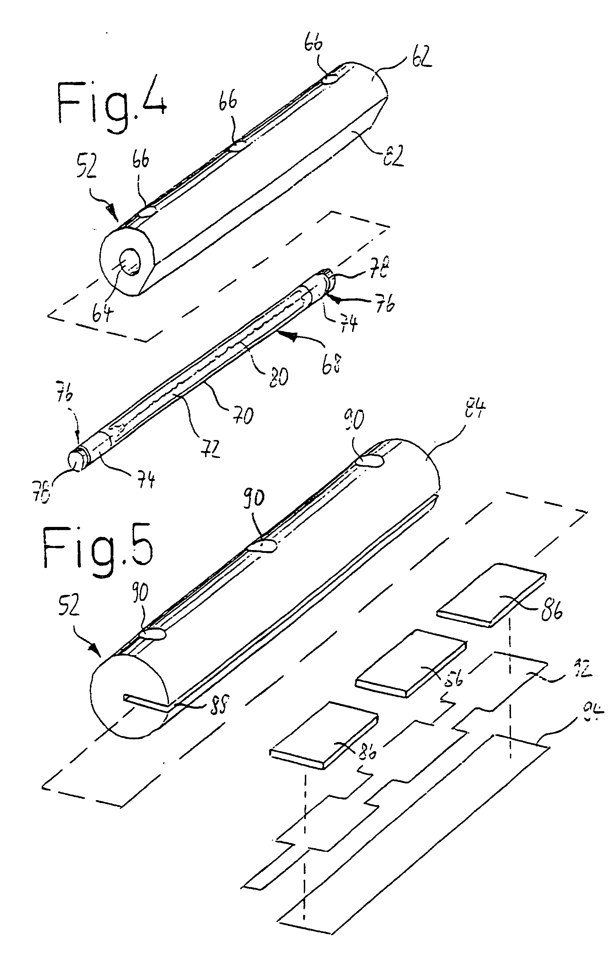

In Fig. 4 ist ein erstes Ausführungsbeispiel einer wärmeerzeugenden Einrichtung 52 dargestellt, wie sei für den erfindungsgemäßen Zuheizer 30 verwendet wird.

Die wärmeerzeugende Einrichtung 52 weist ein Strangpressprofil 62 aus einer Aluminiumlegierung mit einem im wesentlichen zylindrischen Grundkörper auf, in dem in Längsrichtung des Strangpressprofils 62 eine zylindrische Längsöffnung 64 und quer zu dieser drei zylindrische Queröffnungen 66 ausgebildet sind.

In die Queröffnungen 66 sind bei montiertem Zuheizer 30 untere Enden der Wärmerohre 58 eingesteckt und dort wärmeleitend verstemmt oder verlötet.

Die Längsöffnung 64 dient zum Aufnehmen eines elektrischen Heizelementes in Gestalt eines Heizstabes 68. Der Heizstab 68 ist mit einem zylindrischen Rohrmantel 70 versehen, dessen Durchmesser an den Durchmesser der Längsöffnung 64 angepasst ist. Im Rohrmantel 70 befindet sich Isoliermasse 72. An den Enden ist der Rohrmantel 70 durch keramische Endbuchsen 74 verschlossen, an denen je ein elektrischer Anschluss 76 mit einem Anschlussbolzen 78 angeordnet ist. Zwischen den Anschlussbolzen 78 ist ein Heizleiter 80 durch die keramischen Endbuchsen 74 und die Isoliermasse 72 geführt. Bei einem nicht dargestellten Ausführungsbeispiel ist der Rohrmantel 70 weggelassen und der Heizleiter 80 sowie die Isoliermasse 72 sind unmittelbar in die Längsöffnung 64 eingefügt und in dieser festgelegt.

Mit-Hilfe des Heizleiters 80 kann im Betrieb des Zuheizers 30 mit dem Heizstab 68 das Strangpressprofil 62 aufgeheizt werden. Das Strangpressprofil 62 überträgt die Wärme unmittelbar auf die eingebetteten Enden der Wärmerohre 58. Diese führen die Wärme gleichmäßig und schnell zu den Rippen, die als wärmeabgebende Einrichtungen 56 dienen.

Am Strangpressprofil 62 ist schließlich als sogenannte "Funktionsfläche" noch eine Abplattung 82 ausgebildet, mittels der das Strangpressprofil 62 und gegebenenfalls die an ihm angebrachten Wärmerohre 58 mit ihren Rippen direkt an einem Bauteil des Fahrzeugs 12 oder in einem nicht dargestellten Außengehäuse des Zuheizers 30 befestigt werden können. Die Abplattung kann auch zum Befestigen eines Regel-Transistors dienen, mit dem die Heizleistung des Heizleiters 80 elektrisch geregelt wird.

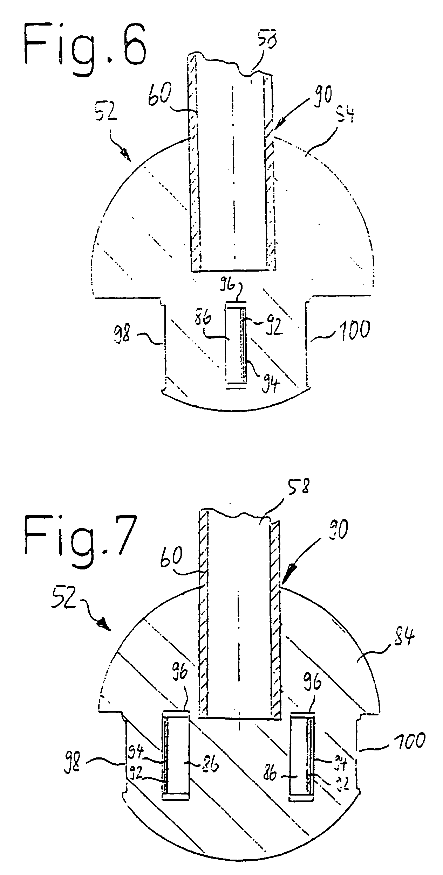

In Fig. 5 ist ein zweites Ausführungsbeispiel einer wärmeerzeugenden Einrichtung 52 mit einem Strangpressprofil 84 dargestellt, welches zum Aufnehmen von PTC-Heizelementen 86 dient.

Das Strangpressprofil 84 ist als zylindrischer Grundkörper gestaltet, in dem ein Längsschlitz 88 und quer zu diesem drei Queröffnungen 90 ausgebildet sind. Die Queröffnungen 90 dienen wiederum zum Aufnehmen von Enden der Wärmerohre 58.

Im Längsschlitz 88 werden bei der Montage des Zuheizers 30 die PTC-Heizelemente 86 eingeklemmt. Zum Klemmen wird das Strangpressprofil 84 im Bereich des Längsschlitzes 88 elastisch geweitet, die PTC-Heizelemente 86 werden eingeschoben und es wird zugelassen, dass sich der Längsschlitz 88 wieder elastisch verengt.

Somit ist zwischen dem Strangpressprofil 84 und den PTC-Heizelementen 86 eine gut wärmeleitende und zugleich für eine elektrische Kontaktierung geeignete Verbindung geschaffen. Für diese sind im Längsschlitz 88 nicht dargestellte Funktionsflächen ausgebildet. Kontaktiert werden die PTC-Heizelemente 86 mit Hilfe einer Kontaktfolie 92, die an einer Seite der PTC-Heizelemente 86 im Längsschlitz 88 anliegt und gegen das Strangpressprofil 84 mit Hilfe einer Isolierfolie 94 elektrisch isoliert ist.

In Fig. 6 ist ein weiteres Ausführungsbeispiel einer wärmeerzeugenden Einrichtung 52 veranschaulicht. Bei diesem Ausführungsbeispiel ist im Strangpressprofil 84, wie oben erläutert zumindest eine Queröffnung 90 zum Aufnehmen eines Endes eines Wärmerohres 58 ausgebildet.

Ferner ist im Strangpressprofil 84 als Längsöffnung ein schlitzförmiger Durchbruch 96 ausgebildet, der sich in Längsrichtung des Wärmerohres 58 unterhalb von dessen Ende befindet. In dem Durchbruch 96 sind PTC-Heizelemente 86 mit Hilfe einer Kontaktfolie 92 und einer Isolierfolie 94, wie oben erläutert, eingesetzt.

An den Seiten des Strangpressprofils 84 sind zwei Abplattungen 98 und 100 ausgebildet, an denen das Strangpressprofil 84 in Richtung auf die PTC-Heizelemente 86 verstemmt bzw. verpresst worden ist. Durch dieses Verpressen sind die PTC-Heizelemente 86 im Durchbruch 96 mechanisch und wärmeleitend festgelegt und elektrische Kontaktierungen an der Kontaktfolie 92 geschaffen.

In Fig. 7 ist ein Ausführungsbeispiel einer wärmeerzeugenden Einrichtung 52 veranschaulicht, bei der in dem Strangpressprofil 84 unterhalb und neben den Wärmerohren 58 zwei Durchbrüche 96 zum Aufnehmen von PTC-Heizelementen 86 ausgebildet sind. Bei dieser Anordnung ist eine besonders gute Wärmeableitung von den PTC-Heizelementen 86 an die Enden der Wärmerohre 58 geschaffen. Die PTC-Heizelemente 86 sind in den Durchbrüchen 96 so ausgerichtet eingesetzt, dass ihre Oberflächen, die in unmittelbarem Kontakt mit dem Strangpressprofil 84 sind, zur Längsachse des Wärmerohres 58 gewandt sind. Bei einem nicht dargestellten Ausführungsbeispiel sind die genannten Oberflächen je zum Ende des Wärmerohres 58 gerichtet. Die Durchbrüche 96 sind also V-förmig angeordnet. Darüber hinaus kann das Ende des Wärmerohres 58 flachgepresst und verschlossen sein. Die Queröffnung 90 kann an ihrem Grund an die Form des flachgepressten Wärmerohres 58 angepasst sein. Sie ist dann in diesem Bereich im Querschnitt ebenfalls V-förmig.

An den Seiten des Strangpressprofils 84 sind analog zum Ausführungsbeispiel gemäß Fig. 6 Abplattungen 98 und 100 ausgebildet. Das Strangpressprofil 84 ist dabei im Bereich zwischen den Durchbrüchen 96 derart stabil gestaltet, dass es sich während des Verpressens der PTC-Heizelemente 86 in diesem Bereich im wesentlichen nicht verformt.

Alternativ kann das Strangpressprofil 84 im Bereich zwischen den beiden Durchbrüchen 96 gezielt verformbar gestaltet sein. Der Verformungsvorgang kann genutzt werden, um wenigstens das Ende eines Wärmerohres 58 zusammenzupressen und zu verschließen, das vor dem Verpressen in die Queröffnung 90 eingesetzt worden ist.

Die PTC-Heizelemente 86 sind bei dem elektrischen Zuheizer 30 die Bauteile, welche aufgrund ihrer komplexen Herstellung und ihres teueren Materials die höchsten Kosten verursachen. Man ist daher bestrebt, die PTC-Heizelemente 86 mit maximaler Leistung P zu betreiben. Bei konstanter Versorgungsspannung bedeutet dies wegen P = U²/ R, dass auf der Widerstandskennlinie der PTC-Heizelemente 86 der minimale Widerstand angesteuert werden sollte.

Der eingangs beschriebene Gleichgewichtszustand zwischen Widerstand und Temperatur an den PTC-Heizelementen 86 und auch die dabei erreichte Temperatur der Keramik hängen in hohem Maße von der Wärmeabgabe an die Umgebung ab. Nur mit einer günstigen wärmeleitenden Einrichtung 54 können hohe Heizleistungen erzielt und damit ein optimierter und langlebiger Zuheizer mit PTC-Keramik geschaffen werden.

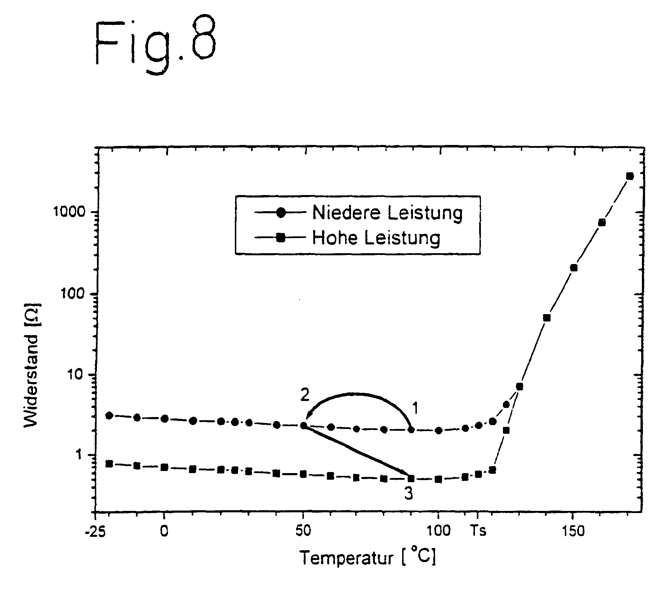

Die erfindungsgemäße Kombination von PTC-Heizelementen 86 mit Wärmerohren 58 führt zu einer stärkeren Ableitung von Wärme von den PTC-Heizelementen 86 als bei bisher verwendeten Technologien. Als Folge der besseren Wärmeleitung erniedrigt sich die Temperaturdifferenz zwischen den PTC-Heizelementen 86 und den wärmeabgebenden Einrichtungen 56 des Zuheizers 30. Die PTC-Heizelemente 86 kühlen ab. Die damit verbundene Erhöhung des Widerstandes lässt die elektrische Leistung abfallen, bis ein neuer Gleichgewichtszustand erreicht ist (siehe Punkt 1 nach Punkt 2 in Fig. 8). Die PTC-Heizelemente 86 würden also grundsätzlich bei niedrigerer Temperatur betrieben.

Nun kann jedoch eine PTC-Keramik mit einem besonders niedrigen elektrischen Widerstand verwendet werden. Dadurch erhöht sich die Leistung der PTC-Heizelemente 86 und somit steigt die Temperatur wieder auf den optimalen Betriebspunkt an (siehe Punkt 2 nach Punkt 3 in Fig. 8). Beim optimalen Betriebspunkt befinden sich die PTC-Heizelemente 86 in der Nähe der Stelle des niedrigsten Widerstandes der PTC-Keramik.

Dies bedeutet, dass die PTC-Heizelemente 86 das niedrigste Eigengewicht pro abgegebener Leistung aufweisen. Die erfindungsgemäße Verwendung von Wärmerohren 58 bietet also die Möglichkeit, bei konstanter Heizleistung die Anzahl und das Gewicht der PTC-Heizelemente 86 samt Kontaktierung signifikant zu verringern. Die Heizleistung kann bezogen auf die Kosten der PTC-Heizelemente 86 erheblich gesteigert werden. Darüber hinaus kann die wärmeerzeugende Einrichtung 52 besonders kompakt gestaltet sein.

### Bezugszeichenliste

- 10: Klimaanlage
- 12: Fahrzeug
- 14: Instrumententafel
- 16: Lufteinlass
- 18: Motorhaube
- 20: Windschutzscheibe
- 22: Luftgebläse
- 24: Klimakasten
- 26: Wärmeübertrager
- 28: Wärmeübertrager
- 30: elektrischer Zuheizer
- 32: Luftkanal
- 34: Luftkanal
- 36: Luftkanal
- 38: Auslassklappe
- 40: Auslassklappe
- 42: Auslassklappe
- 44: Luftauslass
- 46: Luftauslass
- 48: Luftauslass
- 50: Fahrgastraum
- 52: wärmeerzeugende Einrichtung
- 54: wärmleitende Einrichtung
- 56: wärmeabgebende Einrichtung
- 58: Wärmerohr
- 60: Wand
- 62: Strangpressprofil
- 64: Längsöffnung
- 66: Queröffnung
- 68: Heizstab
- 70: Rohrmantel
- 72: Isoliermasse
- 74: Endbuchse
- 76: Anschluss
- 78: Anschlussbolzen
- 80: Heizleiter
- 82: Abplattung
- 84: Strangpressprofil
- 86: PTC-Heizelement
- 88: Längsschlitz
- 90: Queröffnung
- 92: Kontaktfolie
- 94: Isolierfolie
- 96: Durchbruch
- 98: Abplattung
- 100: Abplattung

## Patentansprüche

1. Zuheizer (30) für eine Fahrzeug-Klimaanlage (10) mit mindestens einem Wärmerohr (58), welches zwischen einer wärmeerzeugenden Einrichtung (52) mit einem Heizelement (80, 86) und mindestens einer wärmeabgebenden Einrichtung (56) über ein im Wärmerohr (58) verdampfendes und kondensierendes Medium eine wärmeleitende Verbindung (54) herstellt,
**dadurch gekennzeichnet, dass** die wärmeerzeugende Einrichtung (52) mit einem Strangpressprofil (62, 84) gestaltet ist, an das das mindestens eine Wärmerohr (58) wärmeleitend gekoppelt ist.

2. Zuheizer nach Anspruch 1,
**dadurch gekennzeichnet, dass** im Strangpressprofil (62, 84) in dessen Querrichtung mindestens eine erste Öffnung (66, 90) zum Aufnehmen eines Endes eines Wärmerohres (58) ausgebildet ist.

3. Zuheizer nach Anspruch 1 oder 2,
**dadurch gekennzeichnet, dass** zwischen dem Strangpressprofil (62, 84) und dem mindestens einen Wärmerohr (58) durch eine Verlötung eine wärmeleitende Verbindung gebildet ist.

4. Zuheizer nach einem der Ansprüche 1 bis 3,
**dadurch gekennzeichnet, dass** zwischen dem Strangpressprofil (62, 84) und dem mindestens einen Wärmerohr (58) durch eine Verstemmung eine wärmeleitende Verbindung gebildet ist.

5. Zuheizer nach einem der Ansprüche 1 bis 4,
**dadurch gekennzeichnet, dass** im Strangpressprofil (62, 84) in dessen Längsrichtung eine zweite Öffnung (64, 88, 96) zum Aufnehmen mindestens eines Heizleiters (80) oder eines PTC-Heizelementes (86) ausgebildet ist.

6. Zuheizer nach Anspruch 5,
**dadurch gekennzeichnet, dass** am Strangpressprofil (62, 84) insbesondere im Bereich der zweiten Öffnung (64, 88, 96) zumindest eine Funktionsfläche für die mechanische, elektrische oder wärmeleitende Anbindung des mindestens einen Heizleiters (80) oder PTC-Heizelementes (86) vorgesehen ist.

7. Zuheizer nach Anspruch 5 oder 6,
**dadurch gekennzeichnet, dass** die zweite Öffnung als Schlitz (88) gestaltet ist, in den insbesondere das mindestens eine PTC-Heizelement (86) in Querrichtung des Strangpressprofils (84) eingeschoben ist.

8. Zuheizer nach Anspruch 7,
**dadurch gekennzeichnet, dass** das mindestens eine PTC-Heizelement (86) in dem Schlitz (88) durch federnde Vorspannung des Strangpressprofils (84) gehalten ist.

9. Klimaanlage (10) für ein Fahrzeug (12) mit einem Zuheizer (30) nach einem der Ansprüche 1 bis 8.

10. Fahrzeug (12) mit einer Klimaanlage (10) nach Anspruch 9.

11. Verfahren zum Herstellen eines Zuheizers (30) für eine Fahrzeug-Klimaanlage (10) mit den Schritten:
- Herstellen einer wärmeleitenden Verbindung zwischen mindestens einem Wärmerohr (58) und einem Strangpressprofil (62, 84), in dessen Längsrichtung eine Öffnung (64, 88, 96) ausgebildet ist, und Einschieben von mindestens einem Heizleiter (80) oder einem PTC-Heizelement (86) in die Öffnung (64, 88, 96).

## Claims

1. Auxiliary heater (30) for a vehicle air-conditioning system (10) comprising at least one heat pipe (58), which by means of a medium that evaporates and condenses in the heat pipe (58) establishes a heat-conducting connection (54) between a heat-generating device (52) comprising a heating element (80, 86) and at least one heat-emitting device (56), **characterized in that** the heat-generating device (52) is formed by an extruded section (62, 84), to which the at least one heat pipe (58) is coupled in a heat-conducting manner.

2. Auxiliary heater according to claim 1,
**characterized in that** in the extruded section (62, 84) in transverse direction thereof at least one first opening (66, 90) is formed for receiving one end of a heat pipe (58).

3. Auxiliary heater according to claim 1 or 2,
**characterized in that** between the extruded section (62, 84) and the at least one heat pipe (58) a heat-conducting connection is formed by a soldering operation.

4. Auxiliary heater according to one of claims 1 to 3,
**characterized in that** between the extruded section (62, 84) and the at least one heat pipe (58) a heat-conducting connection is formed by a caulking operation.

5. Auxiliary heater according to one of claims 1 to 4,
**characterized in that** in the extruded section (62, 84) in longitudinal direction thereof a second opening (64, 88, 96) is formed for receiving at least one heating conductor (80) or PTC heating element (86).

6. Auxiliary heater according to claim 5,
**characterized in that** on the extruded section (62, 84) particularly in the region of the second opening (64, 88, 96) at least one functional area is provided for the mechanical, electrical or heat-conducting connection of the at least one heating conductor (80) or PTC heating element (86).

7. Auxiliary heater according to claim 5 or 6,
**characterized in that** the second opening is designed as a slot (88), into which in particular the at least one PTC heating element (86) is inserted in transverse direction of the extruded section (84).

8. Auxiliary heater according to claim 7,
**characterized in that** the at least one PTC heating element (86) is held in the slot (88) by spring bias of the extruded section (84).

9. Air-conditioning system (10) for a vehicle (12) comprising an auxiliary heater (30) according to one of claims 1 to 8.

10. Vehicle (12) comprising an air-conditioning system (10) according to claim 9.

11. Method of manufacturing an auxiliary heater (30) for a vehicle air-conditioning system (10) comprising the steps:
- establish a heat-conducting connection between at least one heat pipe (58) and an extruded section (62, 84) in the longitudinal direction of which an opening (64, 88, 96) is formed, and
- insert at least one heating conductor (80) or PTC heating element (86) into the opening (64, 88, 96).

## Revendications

1. Appareil de chauffage (30) pour une installation de climatisation pour un véhicule (10) et comportant au moins un tuyau de chauffe (58) lequel, entre un dispositif calorifique (52) avec un élément de chauffe (80, 86) et au moins un dispositif exothermique (56) par l'intermédiaire d'un milieu se condensant et s'évaporant dans un tuyau de chauffe (58), établit une liaison thermo-conductrice (54), **caractérisé en ce que** le dispositif calorifique (52) est configuré avec un profilé filé (62, 84) sur lequel au moins un des tuyaux de chauffe (58) est couplé avec thermoconduction.

2. Appareil de chauffage selon la revendication 1, **caractérisé en ce que** dans le profil filé (62, 84), dans le sens transversal de celui-ci, au moins une première ouverture (66, 90) est configurée pour réceptionner une extrémité d'un tuyau de chauffe (58).

3. Appareil de chauffage selon la revendication 1 ou 2, **caractérisé en ce que** entre le profilé filé (62, 84) et au moins un des tuyaux de chauffe (58), une liaison thermo-conductrice est formée par un brasage.

4. Appareil de chauffage selon l'une des revendications 1 à 3, **caractérisé en ce que** entre le profilé filé (62, 84) et au moins un des tuyaux de chauffe (58), une liaison thermo-conductrice est formée par un rabattage.

5. Appareil de chauffage selon l'une des revendications 1 à 4, **caractérisé en ce que** dans le profil filé (62, 84), dans le sens longitudinal de celui-ci, une deuxième ouverture (64, 88, 96) est configurée pour réceptionner au moins un appareil de chauffage (80) ou un élément de chauffage PTC (86).

6. Appareil de chauffage selon la revendication 5, **caractérisé en ce que** sur le profil filé (62, 84), en particulier dans la zone de la deuxième ouverture (64, 88, 96) au moins une surface fonctionnelle est prévue pour la liaison mécanique, électrique ou thermo-conductrice d'au moins un appareil de chauffage (80) ou d'un élément de chauffage PTC (86).

7. Appareil de chauffage selon la revendication 5 ou 6, **caractérisé en ce que** la deuxième ouverture est configurée comme une fente (88), dans laquelle en particulier est introduit au moins un des éléments de chauffage PTC (86) dans le sens transversal du profil filé (84).

8. Appareil de chauffage selon la revendication 7, **caractérisé en ce qu'**au moins l'un des éléments de chauffage PTC (86) est maintenu dans la fente (88) par une pré-tension élastique du profil filé (84).

9. Installation de climatisation (10) pour un véhicule (12) avec un appareil de chauffage (30) selon une des revendications 1 à 8.

10. Véhicule (12) avec une installation de climatisation (10) selon la revendication 9.

11. Procédé de fabrication d'un appareil de chauffage (30) pour une installation de climatisation dans un véhicule (10) avec les étapes consistant à :
établir une liaison thermo-conductrice entre au moins un tuyau de chauffe (58) et un profil filé (62, 84) dans le sens longitudinal duquel une ouverture (64, 88, 96) est configurée, et introduire au moins un appareil de chauffage (80) ou un élément de chauffage PTC (86) dans l'ouverture (64, 88, 96).
